# EUROPÄISCHE PATENTSCHRIFT

(11) **EP 2 044 834 B1**
(45) Veröffentlichungstag und Bekanntmachung des Hinweises auf die Patenterteilung: **03.03.2010**
(21) Anmeldenummer: 08016594.7
(22) Anmeldetag: 20.09.2008
(51) Int. Cl.: A01G 3/047, F16B 45/02

(54) **Haken und Traganordnung**
Hook and support assembly
Crochet et agencement de support

(30) Priorität: 06.10.2007 DE 102007048104
(43) Veröffentlichungstag der Anmeldung: 08.04.2009
(73) Patentinhaber: Andreas Stihl AG & Co. KG, 71336 Waiblingen (DE)
(72) Erfinder: Menzel, Johannes, 73529 Rechberg (DE); Schneider, Andreas, 71384 Weinstadt (DE)
(74) Vertreter: Wasmuth, Rolf

(56) Entgegenhaltungen:
- DE-A1- 3 536 676
- GB-A- 1 236 724
- US-A- 1 790 056
- US-A- 5 878 834
- US-B1- 6 874 210

## Beschreibung

Die Erfindung betrifft einen Haken der im Oberbegriff des Anspruchs 1 angegebenen Gattung und eine Traganordnung der im Oberbegriff des Anspruchs 11 angegebenen Gattung.

Aus der DE 35 36 676 A1 ist ein Freischneidegerät bekannt, an dem ein Traggurt mittels eines Karabinerhakens befestigt werden kann. Derartige Karabinerhaken weisen üblicherweise ein gefedertes Verschlussglied auf, das nach innen in die Aufnahmeöffnung des Hakens entgegen der Kraft der Feder verschwenkt werden kann. Zur Außenseite des Hakens hin ist das Verschlussglied üblicherweise formschlüssig gesichert.

Zum Lösen eines Arbeitsgeräts von einer derartigen Traganordnung muss das Verschlussglied des Karabinerhakens von Hand verschwenkt werden und der Haken dann aus der Öffnung ausgehakt werden. Diese Bedienung ist vergleichsweise umständlich. Da der Bediener den Karabinerhaken mit einer Hand öffnen muss, steht zum Halten des Arbeitsgeräts nur eine Hand zur Verfügung, so dass das gesamte Gewicht des Arbeitsgeräts mit einer Hand aufgenommen werden muss.

Die US 5,878,834 zeigt einen Haken mit einem schwenkbar gelagerten Verschlussglied, das von der vollständig geschlossenen Stellung der Zugangsöffnung unterschiedlich weit nach innen geschwenkt werden kann.

Die US 6,874,210 B1 offenbart einen Haken an einem Kleiderbügel, dessen Verschlussglied einteilig mit dem Haken ausgebildet ist, und das aufgrund seiner Eigenelastizität sowohl nach innen als auch nach außen schwenkbar ist.

Aus der US 1,790,056 ist ein Haken bekannt, dessen Verschlussglied sowohl nach innen als auch nach außen schwenkbar ist. Das Verschlussglied wird von einem Verriegelungshebel in seiner Stellung gehalten. Der Verriegelungshebel muss entgegen der Kraft einer Feder betätigt werden, um das Verschlussglied freizugeben. Das Verschlussglied ist dann frei beweglich.

Die GB 1 236 724 zeigt einen Haken, dessen Verschlussglied von einem Ring gebildet ist, dessen beide Enden zueinander beabstandet an dem Haken fixiert sind. Aufgrund des Abstands der Schwenkachsen der beiden Enden des Hakens zueinander wird der Ring gegen einen Abschnitt des Hakens gedrückt, der die Zugangsöffnung begrenzt. Der Ring kann nur nach innen verschwenkt werden.

Der Erfindung liegt die Aufgabe zugrunde, einen Haken zur Befestigung eines handgeführten Arbeitsgeräts an einer Gurtanordnung zu schaffen, der ein einfaches Festlegen des Arbeitsgeräts an der Gurtanordnung und ein einfaches Lösen des Arbeitsgeräts von der Gurtanordnung erlaubt. Eine weitere Aufgabe der Erfindung besteht darin, eine Traganordnung anzugeben, die ein einfaches Befestigen und Lösen eines Arbeitsgeräts an einer Gurtanordnung ermöglicht.

Diese Aufgabe wird bezüglich des Hakens durch einen Haken mit den Merkmalen des Anspruchs 1 gelöst.

Bezüglich der Traganordnung wird die Aufgabe durch eine Traganordnung mit den Merkmalen des Anspruchs 11 gelöst.

Um ein einfaches Festlegen und ein einfaches Lösen des . Arbeitsgeräts an der Gurtanordnung zu erreichen, ist vorgesehen, dass das Verschlussglied die Zugangsöffnung in einer zwischen Endlagen liegenden Ruhelage verschließt, und dass das Verschlussglied aus der vorteilhaft mittleren Ruhelage in eine erste und in eine zweite Öffnungsstellung als Endlage verschwenkbar ist. Dabei ist vorteilhaft eine Öffnungsstellung dem Befestigungsvorgang zugeordnet und eine zweite Öffnungsstellung dem Lösen des Arbeitgeräts von der Gurtanordnung. Die beiden Öffnungsstellungen bzw. Endlagen können dadurch auf die Bewegung des Arbeitgeräts beim Einhaken oder beim Lösen angepasst werden, so dass das Verschlussglied durch das Arbeitsgerät selbst in die jeweilige Öffnungsstellung verschwenkt werden kann. Ein Verschwenken des Verschlussglieds von Hand kann dadurch entfallen. Die Bedienung wird dadurch vereinfacht. Der Bediener hat beide Hände zum Halten und Bewegen des Arbeitsgeräts zur Verfügung.

Vorteilhaft wird die erste Öffnungsstellung durch Verschwenken des Verschlussglieds aus der vorzugsweise mittleren Ruhelage in einer ersten Schwenkrichtung erreicht und die zweite Öffnungsstellung durch Verschwenken aus der vorzugsweise mittleren Ruhelage in einer zweiten Schwenkrichtung, die in Gegenrichtung zur ersten Schwenkrichtung liegt. Demnach ist das Verschlussglied aus der mittleren Ruhelage in zwei entgegengesetzt liegende Schwenkrichtungen verschwenkbar. Dabei ist vorgesehen, dass das Verschlussglied in der einen Schwenkrichtung zum Rahmen des Hakens hin und in der anderen Schwenkrichtung von dem Rahmen des Hakens weg verschwenkt. Zum Befestigen und Lösen des Arbeitgeräts an dem Haken können jedoch auch zwei quer zueinander stehende Schwenkrichtungen vorgesehen sein.

Vorteilhaft ist das Verschlussglied in der Ruhelage federnd gehalten. Eine einfache Gestaltung ergibt sich, wenn das Verschlussglied in der Ruhelage durch seine Eigenelastizität gehalten ist. Ein zusätzliches Federelement kann dadurch entfallen. Dadurch ergibt sich ein einfacher und robuster Aufbau.

Es ist vorgesehen, dass der Haken ein freies Ende besitzt, das die Zugangsöffnung begrenzt, und dass das Verschlussglied in der Ruhelage einen Abstand zum freien Ende des Hakens besitzt. Der Abstand ist dabei vorteilhaft kleiner als der Durchmesser eines in dem Haken einzuhakenden Elements, so dass das Verschlussglied ein unbeabsichtigtes Aushaken des eingehakten Elements verhindert. Der Abstand ermöglicht gleichzeitig ein ungehindertes Verschwenken des Verschlussglieds in beide Richtungen. Ein mechanischer Anschlag, der eine Lage des Verschlussglieds festlegt, kann dadurch entfallen. Dadurch kann Verschleiß minimiert werden, und die Lebensdauer des Hakens wird erhöht.

Eine einfache Gestaltung des Verschlussglieds wird erreicht, wenn das Verschlussglied einen ersten Schenkel und einen zweiten Schenkel aufweist, wobei die beiden Schenkel auf gegenüberliegenden Seiten des Rahmens des Hakens verlaufen und durch einen Verbindungsabschnitt miteinander verbunden sind. Vorteilhaft ist der erste Schenkel an einem ersten Schwenklager und der zweite Schenkel an einem zweiten Schwenklager an dem Rahmen gelagert, wobei die Schwenkachsen der beiden Schwenklager einen Abstand zueinander aufweisen. Dadurch, dass die beiden miteinander verbundenen Schenkel um unterschiedliche Schwenkachsen drehen, lässt sich eine stabile Ruhelage erreichen. Beim Verschwenken des Verbindungsglieds aus der Ruhelage werden die Schenkel und der Verbindungsabschnitt aufgrund der voneinander beabstandeten Schwenkachsen verformt. Dadurch ist sichergestellt, dass das Verschlussglied aufgrund seiner Eigenelastizität zurück in die Ruhelage verschwenkt, sobald das einzuhakende Element die Zugangsöffnung passiert hat.

Um in beiden Schwenkrichtungen gleiche Kräfte zu erreichen, ist vorgesehen, dass die beiden Schwenkachsen in Ruhelage des Verschlussglieds in einer Ebene mit dem Verbindungsabschnitt liegen. Vorteilhaft verlaufen die Schenkel des Verschlussglieds zwischen dem jeweiligen Schwenklager und dem Verbindungsabschnitt gerade und in der durch die Schwenkachsen aufgespannten Ebene. Eine einfache Gestaltung ergibt sich, wenn das Verschlussglied als Drahtbügel ausgebildet ist. Der Drahtbügel kann auf einfache Weise hergestellt werden. Dadurch, dass die Ruhelage durch die Ausrichtung der beiden Schwenklager festgelegt ist, müssen bei der Herstellung des Bügels keine genauen Toleranzen eingehalten werden. Es ergibt sich ein robustes, einfach aufgebautes System.

Es ist vorgesehen, dass der Haken einen Aufnahmeraum für ein in dem Haken einzuhängendes Element besitzt. Der in Richtung einer Höhe der Zugangsöffnung gemessene Abstand eines Dachs des Aufnahmeraums zum freien Ende des Hakens entspricht dabei vorteilhaft mindestens 80% der Höhe der Zugangsöffnung. Vorteilhaft entspricht der Abstand des Dachs zum freien Ende des Hakens mindestens der Höhe der Zugangsöffnung. In üblicher Arbeitsposition des Arbeitsgeräts kann das in dem Haken eingehängte Element dadurch in dem an das Dach angrenzenden Bereich des Aufnahmeraums angeordnet sein. Dieser Bereich wird durch das freie Ende des Hakens begrenzt, so dass in normaler Arbeitsposition keine Kräfte an dem Verbindungsglied wirken. Das Verbindungsglied wirkt demnach nur als Sicherung. Die üblicherweise im Betrieb wirkenden Kräfte werden vom Rahmen des Hakens aufgenommen.

Für eine Traganordnung mit einem handgeführten Arbeitsgerät, einer Gurtanordnung und einer Befestigungseinrichtung zum Befestigen des Arbeitsgeräts an der Gurtanordnung, wobei die Befestigungseinrichtung einen Haken und ein in dem Haken einzuhakendes Element aufweist, wobei der Haken einen offenen Raum mit einer Zugangsöffnung und ein Verschlussglied umfasst, und wobei das Verschlussglied die Zugangsöffnung in mindestens einer Stellung des Verschlussglieds mindestens teilweise verschließt, ist vorgesehen, dass die Stellung, in der das Verschlussglied die Zugangsöffnung mindestens teilweise verschließt, vorzugsweise eine mittlere Ruhelage ist, und dass das Verschlussglied aus der mittleren Ruhelage in eine erste Öffnungsstellung und in eine zweite Öffnungsstellung verschwenkbar ist.

Um sicherzustellen, dass in üblicher Arbeitshaltung an dem Verschlussglied keine Kräfte wirken und alle auftretenden Kräfte von dem Rahmen des Hakens aufgenommen werden, ist vorgesehen, dass die Zugangsöffnung des Hakens auf der einem Werkzeug des Arbeitsgeräts abgewandten Seite des Hakens angeordnet ist. Sowohl beim Führen des Werkzeugs in Bodennähe als auch beim Führen des Werkzeugs etwa auf Schulterhöhe des Benutzers wird das Gewicht des Arbeitsgeräts von dem Rahmen des Hakens und nicht von dem Verschlussglied aufgenommen. Vorteilhaft ist der Haken in normaler Arbeitsposition des Arbeitsgeräts nach oben geschlossen. Es ist vorgesehen, dass der Haken an dem Arbeitsgerät, und das in dem Haken einzuhakende Element an der Gurtanordnung angeordnet sind.

Ein Ausführungsbeispiel der Erfindung wird im Folgenden anhand der Zeichnung erläutert. Es zeigen:
- Fig. 1: eine schematische Darstellung einer Traganordnung für einen Freischneider,
- Fig. 2: ein Griffgehäuse des Freischneiders mit daran an- geordnetem Haken in perspektivischer Darstellung,
- Fig. 3: eine perspektivische Darstellung des Hakens,
- Fig. 4: eine Seitenansicht des Hakens aus Fig. 3,
- Fig. 5: eine Seitenansicht des Hakens aus Fig. 4 in Richtung des Pfeils V in Fig. 4,
- Fig. 6: eine Seitenansicht des Verschlussglieds des Hakens aus den Figuren 3 bis 5,
- Fig. 7: eine Seitenansicht des Hakens mit dem Verschlussglied in einer ersten Öffnungsstellung,
- Fig. 8: eine Seitenansicht des Hakens mit dem Verschlussglied in einer zweiten Öffnungsstellung,
- Fig. 9: eine Seitenansicht des Hakens, bei dem das Ver- schlussglied schematisch in allen drei Stellungen eingezeichnet ist,
- Fig. 10: eine Seitenansicht auf den Haken aus Fig. 9 von der in Fig. 9 hinten liegenden Seite,
- Fig. 11: eine schematische Darstellung einer Traganordnung für ein Erntegerät wie einen Olivenschüttler.

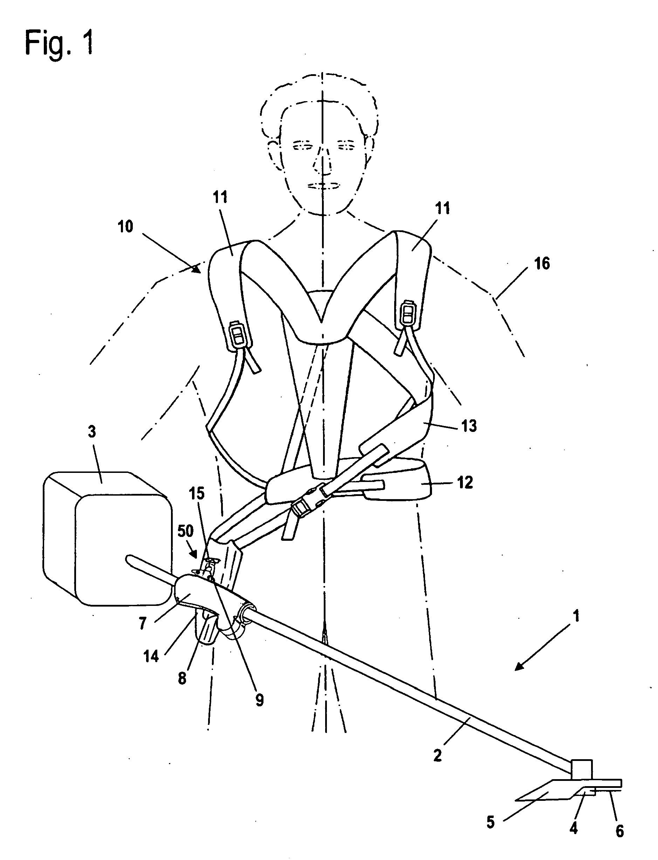

Die in Fig. 1 gezeigte Traganordnung umfasst eine Gurtanordnung 10, eine Befestigungseinrichtung 50 und einen Freischneider 1. Anstatt des Freischneiders 1 kann die Gurtanordnung 10 auch für ein anderes handgeführtes Arbeitsgerät, beispielsweise für einen Hochentaster, ein Erntegerät wie z. B. einen Olivenschüttler oder dgl. eingesetzt werden. Der Freischneider 1 umfasst ein Führungsrohr 2, an dessen einem Ende ein Motorgehäuse 3 und an dem gegenüberliegenden Ende ein Fadenmähkopf 4 angeordnet ist. Aus dem Fadenmähkopf 4 ragt ein Mähfaden 6, der das Werkzeug des Freischneiders 1 bildet. Der Flugkreis des Mähfadens 6 ist an der einem Bediener 16 zugewandten Seite von einem Schutz 5 abgedeckt. In dem Motorgehäuse 3 ist ein nicht gezeigter Antriebsmotor angeordnet, der beispielsweise ein Zweitaktmotor oder ein gemischgeschmierter Viertaktmotor sein kann. Der Antriebsmotor kann jedoch auch ein Elektromotor sein. Der Antriebsmotor treibt eine in dem Führungsrohr 2 drehbar gelagerte Antriebswelle an, die den Fadenmähkopf 4 rotierend antreibt. Zum Führen des Freischneiders 1 ist am Führungsrohr 2 ein Handgriff 7 festgelegt. Am Handgriff 7 ist ein Gashebel 8 zum Bedienen des Antriebsmotors vorgesehen.

Der Freischneider 1 ist über die Befestigungseinrichtung 50 an einer Tragplatte 14 der Gurtanordnung 10 angeordnet. Hierzu ist am Handgriff 7 ein Haken 9 festgelegt, der in eine Öse 15 an der Tragplatte 14 eingehakt ist.

Die Gurtanordnung 10 besitzt zwei Schultergurte 11, einen Seitengurt 13 und einen Beckengurt 12. Der Beckengurt 12 ist offen ausgebildet und mit seinen freien Enden mit der Tragplatte 15 verbunden. Die Befestigungseinrichtung 50 kann jedoch auch für eine Gurtanordnung 10 vorgesehen sein, die nur einen Schultergurt umfasst, der mit dem Freischneider 1 verbunden ist.

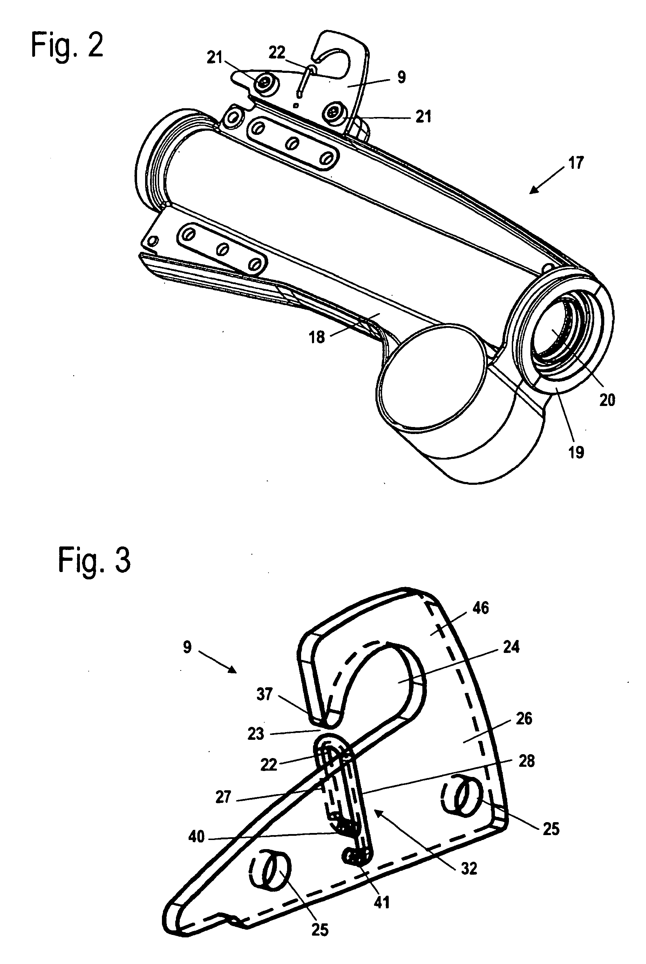

Fig. 2 zeigt das Griffgehäuse 17 des Handgriffs 7. Das Griffteil des Handgriffs 7, das das Griffgehäuse 17 umgibt, ist in Fig. 2 nicht gezeigt. Wie Fig. 2 zeigt, besitzt das Griffgehäuse 17 zwei Halbschalen 18 und 19, die eine zylindrische Aufnahme 20 für das Führungsrohr 2 begrenzen. Der Haken 9 ist mit zwei Befestigungsschrauben 21 an der dem Gashebel 8 (Fig. 1) gegenüberliegenden Seite an dem Griffgehäuse 17 festgelegt. In üblicher Arbeitsposition ist der Haken 9 oberhalb des Führungsrohrs 2 und des Handgriffs 7 angeordnet. Wie Fig. 2 zeigt, besitzt der Haken 9 ein Verschlussglied 22, das im Folgenden noch näher beschrieben ist.

Wie Fig. 3 zeigt, besitzt der Haken 9 einen offenen Rahmen 46, der von einer ebenen Grundplatte 26 gebildet ist. Der Rahmen 46 kann beispielsweise als Stanzteil aus einem Blech hergestellt sein. In der Grundplatte 26 sind zwei Befestigungsöffnungen 25 zur Aufnahme der Befestigungsschrauben 21 vorgesehen. Der Rahmen 46 bildet einen Aufnahmeraum 24, der über eine Zugangsöffnung 23 zugänglich ist. Wie die Figuren 1 und 2 zeigen, ist die Zugangsöffnung 23 an der dem Motorgehäuse 3 zugewandten, dem Mähfaden 6 abgewandten Seite des Freischneiders 1 angeordnet, so dass der Rahmen 46 bei der in Fig. 1 gezeigten üblichen Arbeitsposition des Freischneiders 1 nach vorne und nach oben geschlossen ist.

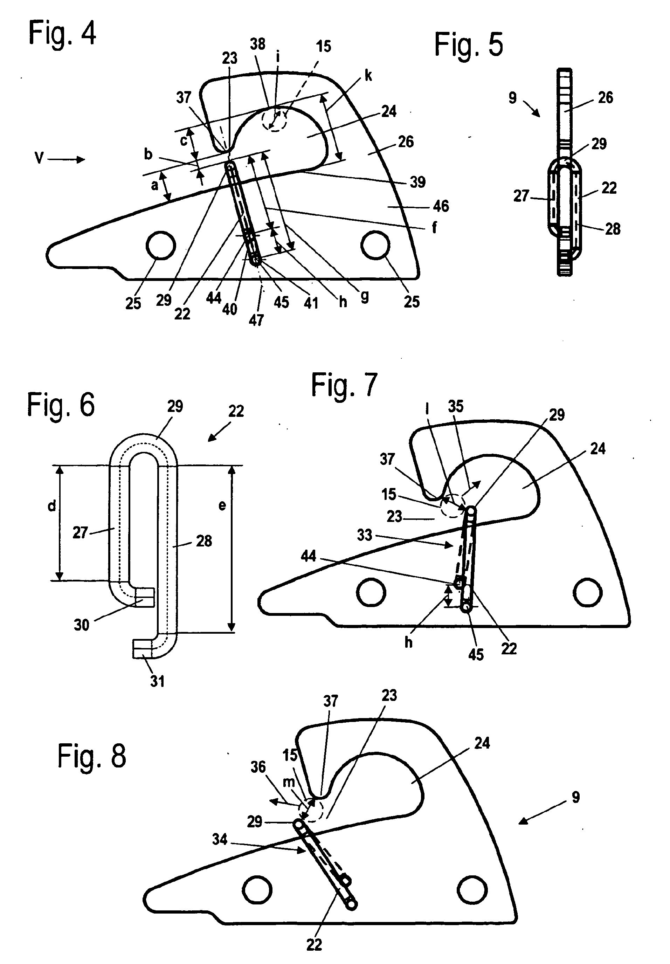

Der Rahmen 46 besitzt ein freies Ende 37, das die Zugangsöffnung 23 begrenzt. Das feie Ende 37 ist heruntergezogen ausgebildet und erstreckt sich auf das Verschlussglied 22 zu. Das Verschlussglied 22 ist an der dem freien Ende 37 gegenüberliegenden Seite des Rahmens 46 festgelegt und ragt in Richtung auf das freie Ende 37. Das Verschlussglied 22 besitzt einen ersten Schenkel 27 und einen zweiten Schenkel 28. Das Verschlussglied 22 ist als Drahtbügel ausgebildet. Der erste Schenkel 27 ist in einem Schwenklager 40 in der Grundplatte 26 gelagert und der zweite Schenkel 28 in einem Schwenklager 41. In Fig. 4 ist das Verschlussglied 22 in einer stabilen Ruhelage gezeigt, die eine mittlere Ruhelage zwischen zwei Öffnungsstellungen sein kann und nachfolgend allgemein als Mittellage 32 bezeichnet ist, in der keine äußeren Kräfte auf das Verschlussglied 22 einwirken. Die Mittellage muss keine mathematisch genaue Mittellage zwischen den Öffnungsstellungen sein. Der Begriff Mittellage bezeichnet allgemein eine stabile Stellung zwischen den Öffnungsstellungen, wobei diese stabile Mittellage aber auch etwa in der Mitte zwischen den Öffnungsstellungen liegen kann.

Wie Fig. 4 zeigt, besitzen die beiden Schwenklager 40 und 41 einen Abstand zueinander. Das Schwenklager 40 besitzt eine Schwenkachse 44 und das Schwenklager 41 eine Schwenkachse 45. Die beiden Schwenkachsen 44 und 45 besitzen einen Abstand h zueinander. Aufgrund des Abstands h ergeben sich unterschiedliche Radien f, g für die beiden Schenkel 27 und 28. Der erste, kürzere Schenkel 27 bewirkt ein Verschwenken eines in Fig. 6 gezeigten Verbindungsabschnitts 29 zwischen den beiden Schenkeln 27 und 28 mit einem Radius f. Der zweite, längere Schenkel 28 bewirkt ein Verschwenken des Verbindungsabschnitts 29 um die zweite Schwenkachse 45 mit einem Radius g. Aufgrund der unterschiedlichen Schwenkradien f und g verwindet sich der Verbindungsabschnitt 29 beim Verschwenken. Auch die Schenkel 27 und 28 werden verformt. Dies wird im Folgenden noch näher erläutert.

Wie Fig. 4 zeigt, besitzt die Zugangsöffnung 23 in den Aufnahmeraum 24 eine Höhe a, die größer als ein Durchmesser i der in den Haken 9 einzuhakenden Öse 15 ist. Die Öse 15 kann beispielsweise als Metallring ausgebildet sein. Die Öse 15 kann jedoch auch durch eine Seilschlaufe oder dgl. gebildet sein. In der in Fig. 4 gezeigten Mittellage 32 des Verschlussglieds 23 besitzt der Verbindungsabschnitt 29 zum freien Ende 37 des Rahmens 46 einen Abstand b, der erheblich kleiner als der Durchmesser i der Öse 15 ist. Der Abstand b stellt sicher, dass das Verschlussglied 22 nicht am freien Ende 37 anstoßen kann. Der Abstand b ist gleichzeitig so gering, dass die Öse 15 nicht durch den Abstand b hindurchtreten kann, ohne das Verschlussglied 22 auszulenken.

Wie Fig. 4 zeigt, ist der Aufnahmeraum 24 an seinem Umfang im Wesentlichen geschlossen ausgebildet und nur im Bereich der Zugangsöffnung 23 geöffnet. Die in Richtung der Höhe a der Zugangsöffnung 23 gemessene Höhe k des Aufnahmeraum 24 ist erheblich größer als die Höhe a der Zugangsöffnung 23. Das freie Ende 37 ist gegenüber einem dem Führungsrohr 2 abgewandt liegenden Dach 38 der Aufnahmeöffnung 24 heruntergezogen ausgebildet. Die Höhe K ist zwischen einem Dach 38 und einem gegenüberliegenden Boden 39 der Aufnahmeöffnung 24 gemessen. Der Boden 39 verläuft dabei gegenüber der Längsrichtung des Führungsrohrs 2 geneigt, und zwar in Richtung auf das Motorgehäuse 3 hin abfallend. Die Zugangsöffnung 23 ist benachbart zum Boden 39, also im unteren Bereich des Aufnahmeraums 24, angeordnet. Das Dach 38 ist gewölbt ausgebildet. Die Öse 15 ist deshalb bei gerader Haltung des Führungsrohrs 2 in einem vorderen, oberen Bereich der Aufnahmeöffnung 24 angeordnet. Das freie Ende 37 besitzt zum Dach 38 einen in Richtung der Höhe a und etwa senkrecht zum Boden 39 gemessenen Abstand c, der mindestes 80% der Höhe a der Zugangsöffnung 23 beträgt. Vorteilhaft ist der Abstand c mindestens so groß wie die Höhe a.

Wie Fig. 4 zeigt, sind die Schwenkachsen 44 und 45 mit dem Verbindungsabschnitt 29 in einer gedachten Ebene 47 angeordnet, die das freie Ende 37 schneidet.

Wie Fig. 5 zeigt, sind die beiden Schenkel 27 und 28 an gegenüberliegenden Seiten der Grundplatte 26 des Hakens 9 angeordnet, während sich der Verbindungsabschnitt 29 im Bereich der Grundplatte 26 erstreckt.

Wie Fig. 6 zeigt, besitzt der erste Schenkel 27 einen Lagerabschnitt 30, der in eine Öffnung der Grundplatte 26 des Hakens 9 ragt und so das erste Schwenklager 40 bildet. Am zweiten Schenkel 28 ist an der dem Verbindungsabschnitt 29 gegenüberliegenden Seite ein Lagerabschnitt 31 angeordnet, der in eine zweite Öffnung der Grundplatte 26 ragt und mit dieser das zweite Schwenklager 41 bildet. Wie Fig. 6 zeigt, sind die Schenkel 27 und 28 zwischen dem jeweiligen Lagerabschnitt 30 bzw. 31 und dem Verbindungsabschnitt 29 gerade ausgebildet. Der erste Schenkel 27 besitzt eine Länge d, die kleiner als eine Länge e des zweiten Schenkels 28 ist. Vorteilhaft beträgt die Länge d des ersten Schenkels 27 etwa 50% bis etwa 90% der Länge e des zweiten Schenkels 28. Die Länge d beträgt vorteilhaft etwa 60% bis etwa 80%, insbesondere etwa 70% der Länge e.

Fig. 7 zeigt das Verschlussglied 22 in einer ersten Öffnungsstellung 33. In dieser Öffnungsstellung befindet sich der Verbindungsabschnitt 29 im Inneren des Aufnahmeraums 24. Wie Fig. 7 zeigt, wird das Verschlussglied 22 durch die in Richtung des Pfeils 35 in den Aufnahmeraum 24 gedrückte Öse 15 ausgelenkt. Dadurch vergrößert sich der Abstand zwischen dem freien Ende 37 und dem Verbindungsabschnitt 29 auf einen Abstand 1, der dem Durchmesser i der Öse 15 entspricht. Dadurch kann die Öse 15 in den Aufnahmeraum 24 eingeschoben werden. Aufgrund des Abstands h zwischen den Schwenkachsen 44 und 45 der beiden Schenkel 27 und 28 sind die Schenkel 27 und 28 und der Verbindungsabschnitt 29 in der ersten Öffnungsstellung 33 elastisch verformt. Diese elastische Verformung bewirkt, dass sich das Verschlussglied 22, nachdem die Öse 15 am Verbindungsabschnitt 29 vorbei in den Aufnahmeraum 24 geschoben wurde, wieder zurück in die Mittellage 32 verschwenkt. Das Verschwenken wird durch die Eigenelastizität des Verschlussglieds 22 bewirkt, so dass kein zusätzliches Federelement notwendig ist.

In Fig. 8 ist das Verschlussglied 22 in einer zweiten Öffnungsstellung 34 gezeigt, in der der Verbindungsabschnitt 29 aus dem Aufnahmeraum 24 herausgeschwenkt ist. Dies wird durch eine Bewegung der Öse 15 in Richtung des Pfeils 36 aus dem Aufnahmeraum 24 heraus bewirkt. Das Verschwenken des Verschlussglieds 22 bewirkt ein Vergrößern des Abstands zwischen dem Verbindungsabschnitt 29 und dem freien Ende 37 auf einen Abstand m, der dem Durchmesser i der Öse 15 und dem Abstand 1 in der ersten Öffnungsstellung 33 entspricht. Auch in dieser zweiten Öffnungsstellung 34 ist das Verschlussglied 22 elastisch verformt, so dass das Verschlussglied 22, nachdem die Öse 15 aus dem Bereich des Verbindungsabschnitts 29 bewegt wurde, zurück in seine Mittellage 32 verschwenkt.

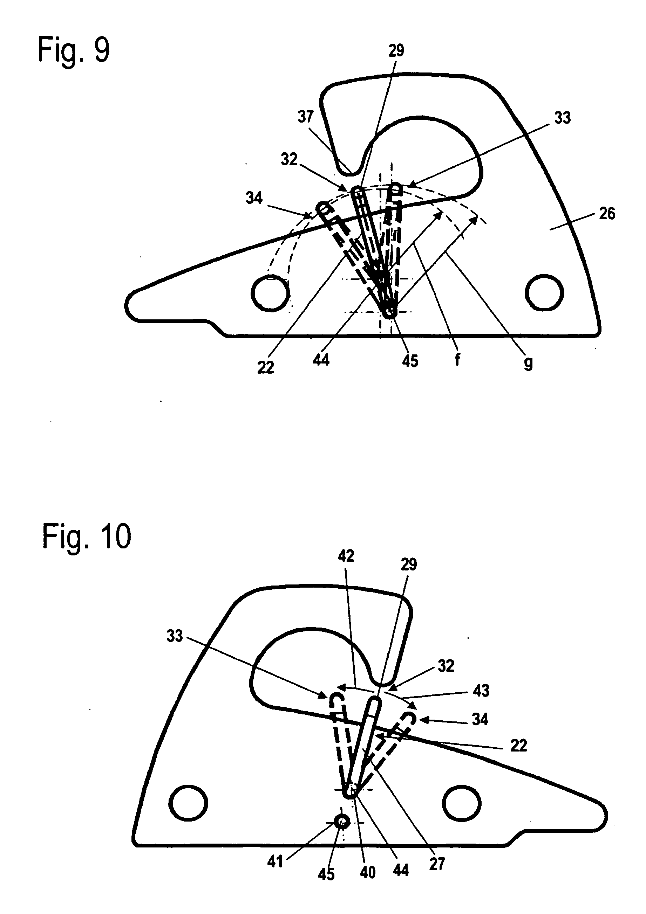

In Fig. 9 sind die Radien f und g verdeutlicht, um die die Schenkel 27 und 28 des Verschlussglieds 22 verschwenken. Wie Fig. 9 zeigt, nimmt der Abstand der Radien f und g bei zunehmender Bewegung aus der Mittellage 32 heraus zu. In der ersten Öffnungsstellung 33 und der zweiten Öffnungsstellung 34 bewirkt der Abstand zwischen den Radien f und g eine elastische Verformung des Verbindungsabschnitts 29 und der beiden Schenkel 27 und 28, die Rückstellkräfte in Richtung auf die Mittellage 32 erzeugen.

Wie Fig. 10 zeigt, wird das Verschlussglied 22 aus der Mittellage 32 in einer ersten Schwenkrichtung 42 in die erste Öffnungsstellung 33 verschwenkt und in einer zweiten Schwenkrichtung 43 aus der Mittellage 32 heraus in die zweite Öffnungsstellung 34. Die beiden Schwenkrichtungen 42 und 43 sind dabei entgegengesetzt gerichtet. Das Verschwenken des Verbindungsabschnitts 29 erfolgt dabei um eine virtuelle Schwenkachse 48, die in Fig. 10 schematisch eingezeichnet ist und die zwischen den beiden Schwenkachsen 44 und 45 liegt.

Anstatt des Drahtbügels können auch andere Elemente als Verschlussglied dienen, beispielsweise ein aufgrund seiner Eigenelastizität in eine Mittellage vorgespanntes Blech, beispielsweise aus Federstahl. Es kann auch vorgesehen sein, zusätzlich ein oder mehrere Federelemente anzuordnen, die das Verschlussglied in seiner Mittellage halten.

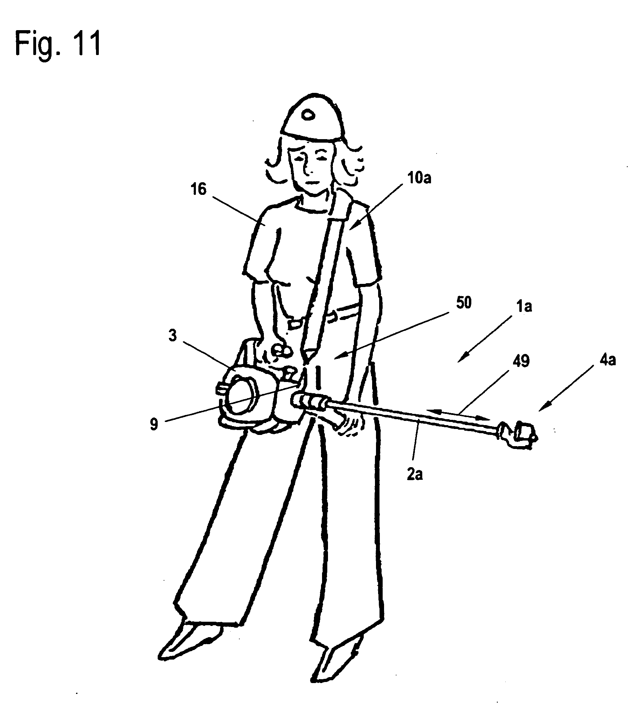

In Fig. 11 ist der erfindungsgemäße Haken 9 in einer Befestigungseinrichtung 50 bei einer Traganordnung 10a für ein Erntegerät 1a wie einen Olivenschüttler gezeigt. Das Erntegerät 1a besteht aus einem Antriebsmotor 3, der über einen Kurbeltrieb eine Rüttelstange 2a hin- und hergehend antreibt (Pfeil 49). Am freien Ende der Rüttelstange 2a ist ein U-förmiger Haken 4a befestigt, der zur Aufnahme eines zu rüttelnden Astes des abzuerntenden Baumes bestimmt ist. Mittels des Rüttelantriebs wird der Ast geschüttelt, so dass sich die erntereifen Früchte lösen und auf den Boden fallen, um dann aufgesammelt zu werden. Der Benutzer 19 trägt das Erntegerät mittels der als Schultergurt ausgebildeten Traganordnung 10a, wobei der erfindungsgemäße Haken 9 sowohl ein einfaches Einhängen des Gurtes als auch ein schnelles Abwerfen des Gurtes gewährleistet.

## Patentansprüche

1. Haken zur Befestigung eines tragbaren, handgeführten Arbeitsgeräts, insbesondere eines Freischneiders, eines Erntegerätes wie einen Olivenschüttler oder dgl., an einer Gurtanordnung (10), wobei der Haken (9) einen offenen Rahmen (46) mit einer Zugangsöffnung (23) und ein Verschlussglied (22) umfasst, wobei das Verschlussglied (22) die Zugangsöffnung (23) in mindestens einer Stellung des Verschlussglieds (22) mindestens teilweise verschließt,
wobei die Stellung, in der das Verschlussglied (22) die Zugangsöffnung (23) mindestens teilweise verschließt, eine Ruhelage (32) ist, und wobei das Verschlussglied (22) aus der Ruhelage (32) in eine erste Öffnungsstellung (33) und in eine zweite Öffnungsstellung (34) verschwenkbar ist, wobei die erste Öffnungsstellung (33) durch Verschwenken des Verschlussglieds (22) aus der Ruhelage (32) in einer ersten Schwenkrichtung (42) erreicht wird und die zweite Öffnungsstellung (34) durch Verschwenken aus der Ruhelage (32) in einer zweiten Schwenkrichtung (43), die in Gegenrichtung zur ersten Schwenkrichtung (42) liegt,
**dadurch gekennzeichnet, dass** das Verschlussglied (22) einen ersten Schenkel (27) und einen zweiten Schenkel (28) aufweist, wobei die beiden Schenkel (27, 28) auf gegenüberliegenden Seiten des Rahmens (46) des Haken (9) verlaufen und durch einen Verbindungsabschnitt (29) miteinander verbunden sind, wobei der erste Schenkel (27) an einem ersten Schwenklager (40) und der zweite Schenkel (28) an einem zweiten Schwenklager (41) an dem Rahmen (46) gelagert sind, wobei die Schwenkachsen (44, 45) der beiden Schwenklager (40, 41) einen Abstand (h) zueinander aufweisen und wobei die beiden Schwenkachsen (44, 45) in Ruhelage (32) des Verschlussglieds (22) in einer Ebene (47) mit dem Verbindungsabschnitt (29) liegen.

2. Haken nach Anspruch 1,
**dadurch gekennzeichnet, dass** das Verschlussglied (22) in der Ruhelage (32) federnd gehalten ist.

3. Haken nach Anspruch 2,
**dadurch gekennzeichnet, dass** das Verschlussglied (22) in der Ruhelage (32) durch seine Eigenelastizität gehalten ist.

4. Haken nach einem der Ansprüche 1 bis 3,
**dadurch gekennzeichnet, dass** der Haken (9) ein freies Ende (37) besitzt, das die Zugangsöffnung (23) begrenzt, und dass das Verschlussglied (22) in der Ruhelage (32) einen Abstand (b) zum freien Ende (37) des Hakens (9) besitzt.

5. Haken nach Anspruch 1,
**dadurch gekennzeichnet, dass** die Schenkel (27, 28) des Verschlussglieds (22) zwischen dem jeweiligen Schwenklager (40, 41) und dem Verbindungsabschnitt (29) gerade und in der durch die Schwenkachsen (44, 45) aufgespannten Ebene (47) verlaufen.

6. Haken nach einem der Ansprüche 1 bis 5,
**dadurch gekennzeichnet, dass** das Verschlussglied (22) als Drahtbügel ausgebildet ist.

7. Haken nach einem der Ansprüche 1 bis 6,
**dadurch gekennzeichnet, dass** der Haken (9) einen Aufnahmeraum (24) für ein in dem Haken (9) einzuhängendes Element besitzt.

8. Haken nach Anspruch 7,
**dadurch gekennzeichnet, dass** der in Richtung einer Höhe (a) der Zugangsöffnung (23) gemessene Abstand (c) eines Dachs (38) des Aufnahmeraums (24) zum freien Ende (37) des Hakens (9) mindestens 80% der Höhe (a) der Zugangsöffnung (23) entspricht.

9. Haken nach einem der Ansprüche 1 bis 8,
**dadurch gekennzeichnet, dass** die Ruhelage (32) des Verschlussgliedes (22) eine stabile Lage zwischen der ersten Öffnungsstellung (33) und der zweiten Öffnungsstellung (34) ist.

10. Haken nach einem der Ansprüche 1 bis 9,
**dadurch gekennzeichnet, dass** die Ruhelage des Verschlussgliedes (22) eine Mittellage (32) zwischen der ersten Öffnungsstellung (33) und der zweiten Öffnungsstellung (34) ist.

11. Traganordnung mit einem handgeführten Arbeitsgerät, insbesondere mit einem Freischneider, einem Erntegerät wie einen Olivenschüttler o. dgl., mit einer Gurtanordnung (10) und einer Befestigungseinrichtung (50) zur Befestigung des Arbeitsgeräts an der Gurtanordnung (10), wobei die Befestigungseinrichtung (50) einen Haken (9) und ein in dem Haken (9) einzuhakendes Element aufweist, wobei der Haken (9) einen offenen Rahmen (46) mit einer Zugangsöffnung (23) und ein Verschlussglied (22) umfasst, wobei das Verschlussglied (22) die Zugangsöffnung (23) in mindestens einer Stellung des Verschlussglieds (22) mindestens teilweise verschließt,
**dadurch gekennzeichnet, dass** die Stellung, in der das Verschlussglied (22) die Zugangsöffnung (23) mindestens teilweise verschließt, eine Ruhelage (32) ist, und dass das Verschlussglied (22) aus der Ruhelage (32) in eine erste Öffnungsstellung (33) und in eine zweite Öffnungsstellung (34) verschwenkbar ist,
wobei die erste Öffnungsstellung (33) durch Verschwenken des Verschlussglieds (22) aus der Ruhelage (32) in einer ersten Schwenkrichtung (42) erreicht wird und die zweite Öffnungsstellung (34) durch Verschwenken aus der Ruhelage (32) in einer zweiten Schwenkrichtung (43), die in Gegenrichtung zur ersten Schwenkrichtung (42) liegt, wobei das Verschlussglied (22) einen ersten Schenkel (27) und einen zweiten Schenkel (28) aufweist, wobei die beiden Schenkel (27, 28) auf gegenüberliegenden Seiten des Rahmens (46) des Haken (9) verlaufen und durch einen Verbindungsabschnitt (29) miteinander verbunden sind, wobei der erste Schenkel (27) an einem ersten Schwenklager (40) und der zweite Schenkel (28) an einem zweiten Schwenklager (41) an dem Rahmen (46) gelagert sind, wobei die Schwenkachsen (44, 45) der beiden Schwenklager (40, 41) einen Abstand (h) zueinander aufweisen und wobei die beiden Schwenkachsen (44, 45) in Ruhelage (32) des Verschlussglieds (22) in einer Ebene (47) mit dem Verbindungsabschnitt (29) liegen.

12. Traganordnung nach Anspruch 11,
**dadurch gekennzeichnet, dass** das Arbeitsgerät ein Werkzeug besitzt, und dass die Zugangsöffnung (23) des Hakens (9) auf der dem Werkzeug abgewandten Seite des Hakens (9) angeordnet ist.

13. Traganordnung nach Anspruch 11 oder 12,
**dadurch gekennzeichnet, dass** der Haken (9) in normaler Arbeitsposition des Arbeitsgeräts nach oben geschlossen ist.

14. Traganordnung nach einem der Ansprüche 11 bis 13,
**dadurch gekennzeichnet, dass** der Haken (9) an dem Arbeitsgerät und das in dem Haken (9) einzuhakende Element an der Gurtanordnung (10) angeordnet ist.

## Claims

1. Hook for attaching a portable, hand-guided working implement, in particular a free cutter, a harvesting implement such as an olive shaker or the like, to a belt arrangement (10), wherein the hook (9) comprises an open frame (46) with an access opening (23) and a closing element (22), wherein the closing element (22) at least partially closes the access opening (23) in at least one position of the closing element (22), wherein the position in which the closing element (22) at least partially closes the access opening (23) is a neutral position (32) and wherein the closing element (22) is pivotable from the neutral position (32) into a first open position (33) and a second open position (34), the first open position (33) being reached by pivoting the closing element (22) from the neutral position (32) in a first pivoting direction (42) and the second open position (34) being reached by pivoting the closing element (22) from the neutral position (32) in a second pivoting direction (43) in the opposite direction to the first pivoting direction (42), **characterised in that** the closing element (22) has a first leg (27) and a second leg (28), the two legs (27, 28) extending on opposite sides of the frame (46) of the hook (9) and being connected to each other by a connecting section (29), the first leg (27) being mounted on the frame (46) on a first pivot bearing (40) and the second leg (28) being mounted on a second pivot bearing (41), the pivot axes (44, 45) of the two pivot bearings (40, 41) having a distance (h) from each other and the two pivot axes (44, 45) lying in one plane with the connecting section (29) in the neutral position (32) of the closing element (22).

2. Hook according to claim 1,
**characterised in that** the closing element (22) is held in its neutral position (32) by springs.

3. Hook according to claim 2,
**characterised in that** the closing element (22) is held in its neutral position (32) by its intrinsic elasticity.

4. Hook according to any of claims 1 to 3,
**characterised in that** the hook (9) has a free end (37) bounding the access opening (23), and **in that** the closing element (22) has a distance (b) from the free end (37) of the hook (9) in its neutral position (32).

5. Hook according to claim 1,
**characterised in that** the legs (27, 28) of the closing element (22) are straight between the respective pivot bearings (40, 41) and the connecting section (29) and extend in the plane (47) defined by the pivot axes (44, 45).

6. Hook according to any of claims 1 to 5,
**characterised in that** the closing element (22) is designed as a wire clip.

7. Hook according to any of claims 1 to 6,
**characterised in that** the hook (9) has a location (24) for an element to be hung in the hook (9).

8. Hook according to claim 7,
**characterised in that** the distance (c) of a roof (38) of the location (24) from the free end (37) of the hook (9) as measured in the direction of a height (a) of the access opening (23) is equal to at least 80% of the height (a) of the access opening (23).

9. Hook according to any of claims 1 to 8,
**characterised in that** the neutral position (32) of the closing element (22) is a stable position between the first open position (33) and the second open position (34).

10. Hook according to any of claims 1 to 9,
**characterised in that** the neutral position of the closing element (22) is a middle position between the first open position (33) and the second open position (34).

11. Support assembly with a hand-guided working implement, in particular a free cutter, a harvesting implement such as an olive shaker or the like, with a belt arrangement (10) and a fastening device (50) for attaching the working implement to the belt arrangement (10), wherein the fastening device (50) comprises a hook (9) and an element to be hooked into the hook (9), wherein the hook (9) comprises an open frame (46) with an access opening (23) and a closing element (22), wherein the closing element (22) at least partially closes the access opening (23) in at least one position of the closing element (22), **characterised in that** the position in which the closing element (22) at least partially closes the access opening (23) is a neutral position (32) and **in that** the closing element (22) is pivotable from the neutral position (32) into a first open position (33) and a second open position (34), the first open position (33) being reached by pivoting the closing element (22) from the neutral position (32) in a first pivoting direction (42) and the second open position (34) being reached by pivoting the closing element (22) from the neutral position (32) in a second pivoting direction (43) in the opposite direction to the first pivoting direction (42), wherein the closing element (22) has a first leg (27) and a second leg (28), the two legs (27, 28) extending on opposite sides of the frame (46) of the hook (9) and being connected to each other by a connecting section (29), the first leg (27) being mounted on the frame (46) on a first pivot bearing (40) and the second leg (28) being mounted on a second pivot bearing (41), the pivot axes (44, 45) of the two pivot bearings (40, 41) having a distance (h) from each other and the two pivot axes (44, 45) lying in one plane with the connecting section (29) in the neutral position (32) of the closing element (22).

12. Support assembly according to claim 11,
**characterised in that** the working implement comprises a tool and **in that** the access opening (23) of the hook (9) is located on the side of the hook (9) which is remote from the tool.

13. Support assembly according to claim 11 or 12,
**characterised in that** the hook (9) is closed in the upward direction in the normal working position of the working implement.

14. Support assembly according to any of claims 11 to 13,
**characterised in that** the element to be hooked into the hook (9) is disposed on the belt arrangement (10).

## Revendications

1. Crochet pour la fixation d'un appareil portatif tenu à la main, en particulier une débroussailleuse, une récolteuse tel qu'un secoueur pour olives ou un appareil similaire, à un dispositif formant harnais (10), le crochet (9) comprenant un cadre ouvert (46) avec une ouverture d'accès (23), et un organe de fermeture (22), l'organe de fermeture (22), dans au moins une position, fermant au moins en partie l'ouverture d'accès (23), la position dans laquelle l'organe de fermeture (22) ferme au moins en partie l'ouverture d'accès (23) étant une position de repos (32), et l'organe de fermeture (22) étant apte à pivoter pour passer de la position de repos (32) à une première position d'ouverture (33) et à une seconde position d'ouverture (34), et la première position d'ouverture (33) étant atteinte grâce à un pivotement de l'organe de fermeture (22) à partir de la position de repos (32) dans un premier sens de pivotement (42) tandis que la seconde position d'ouverture (34) est atteinte grâce à un pivotement à partir de la position de repos (32) dans un second sens de pivotement (43) qui est opposé au premier sens de pivotement (42), **caractérisé en ce que** l'organe de fermeture (22) présente une première branche (27) et une seconde branche (28), les deux branches (27, 28) s'étendant sur des côtés opposés du cadre (46) du crochet (9) et étant reliées par une partie de liaison (29), la première branche (27) étant montée sur le cadre (46) sur un premier palier de pivotement (40) et la seconde branche (28) sur un second palier de pivotement (41), les pivots (44, 45) des deux paliers de pivotement (40, 41) présentant un écartement (h), et les deux pivots (44, 45), dans la position de repos (32) de l'organe de fermeture (22), étant situés dans le même plan (47) que la partie de liaison (29).

2. Crochet selon la revendication 1,
**caractérisé en ce que** l'organe de fermeture (22) est maintenu dans la position de repos (32) par ressort.

3. Crochet selon la revendication 2,
**caractérisé en ce que** l'organe de fermeture (22) est maintenu dans la position de repos (32) grâce à son élasticité propre.

4. Crochet selon l'une des revendications 1 à 3,
**caractérisé en ce qu'**il a une extrémité libre (37) qui limite l'ouverture d'accès (23), et **en ce que** l'organe de fermeture (22), en position de repos (32), a un écartement (b) par rapport à l'extrémité libre (37) du crochet (9).

5. Crochet selon la revendication 1,
**caractérisé en ce que** les branches (27, 28) de l'organe de fermeture (22) s'étendent en ligne droite entre leur palier de pivotement respectif (40, 41) et la partie de liaison (29) et dans le plan (47) défini par les pivots (44, 45).

6. Crochet selon l'une des revendications 1 à 5,
**caractérisé en ce que** l'organe de fermeture (22) est conçu comme une bride en fil métallique.

7. Crochet selon l'une des revendications 1 à 6,
**caractérisé en ce que** le crochet (9) a un logement (24) pour un élément à accrocher dans ledit crochet (9).

8. Crochet selon la revendication 7,
**caractérisé en ce que** la distance (c), mesurée dans le sens d'une hauteur (a) de l'ouverture d'accès (23), entre une partie supérieure (38) du logement (24) et l'extrémité libre (37) du crochet (9) correspond à au moins 80% de la hauteur (a) de l'ouverture d'accès (23).

9. Crochet selon l'une des revendications 1 à 8,
**caractérisé en ce que** la position de repos (32) de l'organe de fermeture (22) est une position stable entre la première position d'ouverture (33) et la seconde position d'ouverture (34).

10. Crochet selon l'une des revendications 1 à 9,
**caractérisé en ce que** la position de repos de l'organe de fermeture (22) est une position intermédiaire (32) entre la première position d'ouverture (33) et la seconde position d'ouverture (34).

11. Dispositif de support avec un appareil tenu à la main, en particulier une débroussailleuse, une récolteuse tel qu'un secoueur pour olives ou un appareil similaire, comportant un dispositif formant harnais (10) et un dispositif de fixation (50) pour la fixation de l'appareil au dispositif formant harnais (10), le dispositif de fixation (50) présentant un crochet (9) et un élément à accrocher dans le crochet (9), le crochet (9) comprenant un cadre ouvert (46) avec une ouverture d'accès (23), et un organe de fermeture (22), l'organe de fermeture (22), dans au moins une position, fermant au moins en partie l'ouverture d'accès (23),
**caractérisé en ce que** la position dans laquelle l'organe de fermeture (22) ferme au moins en partie l'ouverture d'accès (23) est une position de repos (32), et **en ce que** l'organe de fermeture (22) est apte à pivoter pour passer de la position de repos (32) à une première position d'ouverture (33) et à une seconde position d'ouverture (34), la première position d'ouverture (33) étant atteinte grâce à un pivotement de l'organe de fermeture (22) à partir de la position de repos (32) dans un premier sens de pivotement (42) tandis que la seconde position d'ouverture (34) est atteinte grâce à un pivotement à partir de la position de repos (32) dans un second sens de pivotement (43) qui est opposé au premier sens de pivotement (42), l'organe de fermeture (22) présentant une première branche (27) et une seconde branche (28), les deux branches (27, 28) s'étendant sur des côtés opposés du cadre (46) du crochet (9) et étant reliées par une partie de liaison (29), la première branche (27) étant montée sur le cadre (46) sur un premier palier de pivotement (40) et la seconde branche (28) sur un second palier de pivotement (41), les pivots (44, 45) des deux paliers de pivotement (40, 41) présentant un écartement (h), et les deux pivots (44, 45), dans la position de repos (32) de l'organe de fermeture (22), étant situés dans le même plan (47) que la partie de liaison (29).

12. Dispositif de support selon la revendication 11, **caractérisé en ce que** l'appareil a un outil et **en ce que** l'ouverture d'accès (23) du crochet (9) est disposée sur le côté du crochet (9) opposé à l'outil.

13. Dispositif de support selon la revendication 11 ou 12, **caractérisé en ce que** le crochet (9), dans la position de travail normale de l'appareil, est fermé vers le haut.

14. Dispositif de support selon l'une des revendications 11 à 13,
**caractérisé en ce que** le crochet (9) est disposé sur l'outil et l'élément à accrocher dans le crochet (9) est disposé sur le dispositif formant harnais (10).
